# EUROPEAN PATENT SPECIFICATION

(11) **EP 4 476 640 B1**
(45) Date of publication and mention of the grant of the patent: **17.12.2025**
(21) Application number: 23724379.5
(22) Date of filing: 02.05.2023
(51) Int. Cl.: G06Q 10/10, G06F 21/30, H04W 4/44, B60R 25/00, B60R 13/00, G06Q 50/26, G06Q 30/018, G06Q 30/0601, G06Q 40/08, G06Q 50/18, G06Q 50/40

(54) **ELECTRONIC SYSTEM AND METHOD FOR UPDATING VEHICLE COLOR CHANGE DATA, IN REAL TIME**
ELEKTRONISCHES SYSTEM UND VERFAHREN ZUR AKTUALISIERUNG VON FAHRZEUGFARBWECHSELDATEN IN ECHTZEIT
SYSTÈME ÉLECTRONIQUE ET PROCÉDÉ DE MISE À JOUR DE DONNÉES DE CHANGEMENT DE COULEUR DE VÉHICULE, EN TEMPS RÉEL

(30) Priority: 07.07.2022 GR 20220100540
(43) Date of publication of application: 18.12.2024
(73) Proprietor: Select Software And Business Solutions A.e.b.e, 15121 Pefki Attikis (GR)
(72) Inventor: SIDERIS, Ioannis, 14564 Kifisia Attikis (GR)
(74) Representative: Panagiotidou, Effimia
(86) International application number: PCT/GR2023/000016
(87) International publication number: WO 2024/009116

(56) References cited:
- US-A1- 2019 174 279
- US-A1- 2022 024 476
- US-B1- 10 764 751

## Description

The present invention belongs to the field of electronic communication between systems and in particular to the exchange of information characterizing technical characteristics of vehicles and/or means of transport, such as, inter alia, color, color patterns and/or styles, in order to allow their recognition and identification by different users.

The issuance of a new license registration due to a change of color and the subsequent communication to inform police authorities and insurance companies is a time-consuming and costly process.

Today, the process for declaring a color change varies from country to country, however, in general the process is similar, as for public interest and safety reasons, once the color change has been made, the vehicle owner has to declare the color change to the competent authorities or bodies (such as competent ministries, and/or police, and/or insurance company, etc.). This process usually takes a considerable amount of time, for example between 5 and 10 days, during which time there is uncertainty and a lack of synchronization in terms of informing the authorities and updating the data in the databases, making the circulation of the vehicle generally problematic. The vehicle circulates with a provisional registration, which is issued when the required documents are submitted and which is replaced by a new license registration several days later, when the process of issuing a new registration is completed.

Some car manufacturers have created new technologies for instant color change in a few seconds through special coatings and have presented prototype models at international car shows. These include, for example, car coatings which contain particles which, by passing an electric current through them, change the color of the car in seconds.

According to a statement from BMW car manufacturer, "The surface coating of the BMW iX Flow model with "E Ink" coating contains several million microcapsules with a diameter equal to the thickness of a human hair. Each of these microcapsules contains negatively charged white pigments and positively charged black pigments. Depending on the selected setting, stimulation by an electric field causes either the white or black pigments to collect on the surface of the microcapsule, giving the car body the desired color.

Achieving this effect on the vehicle body involves the application of several precisely positioned ePaper segments. Productive design processes are applied to ensure that the parts reflect the characteristic contours of the vehicle and the resulting variations in light and shadow. Design generation algorithms allow for the formatting and flexibility needed to tailor the ePaper precisely to the vehicle design lines.

Laser cutting technologies guarantee high precision in the creation of each part. After the parts are applied and the power supply is connected to stimulate the electric field, the entire body is heated and sealed to guarantee optimal and uniform color reproduction during each color change.

Essentially then, electricity is used to manipulate the microcapsules and change colors. Based on the color change, the technical effect achieved is to maintain the temperature inside the vehicle. For example, a combination of white colors will keep the vehicle cool in the summer, while changing the color to black will keep it warmer in the winter.

Similar technology has been developed by the AUDI car manufacturer, based on the properties of liquid crystals.

As reported in relevant publications (e.g. https://indianexpress.com/article/trending/trending-globally/as-bmw-introduces-a-car-that-changes-colour-netizens-say-too-bad-for-the-cops-7711442/), this presentation is made for the sole purpose of demonstrating new technologies. This technology cannot be applied to the production models available to consumers, as the application of these technologies poses a risk to public safety. In particular, in the event of the need to identify and recognize the vehicle (e.g. if the vehicle is involved in an illegal act or an accident, etc.), it will be impossible to identify the vehicle due to an immediate change in the color of the vehicle if the immediate change has either not been deliberately reported to the authorities by the vehicle owner or has been reported but not yet registered with the competent authorities due to a delay in updating the public administration's records.

The same administrative procedure applies to the technique called "Car Wrapping", i.e. the process whereby the entire surface of the vehicle is covered (coated) with a color change film, which is applied directly over the original color of the car, a technique that takes less time and costs less than color change by painting. Therefore, the same delay in updating public administration records occurs in the "Car Wrapping" technique.

Thus, the main technical problem currently encountered in the color change process is the time required to complete the process, i.e. the color change, the notification of the authorities on behalf of the user, the submission of the supporting documents, the issuing of a temporary license registration, the checking of the documents, the issuing of the new license registration, etc. Furthermore, the process of reinsuring the vehicle is equally problematic because in most countries, a new insurance policy with the new color is required before the vehicle or means of transport can be put back on the road. In addition to this, further time is required to update the public administration's records internally regarding the color change. This process as a whole is currently so costly in time and money that it makes it difficult and time consuming to change the color of the vehicle or conveyance. In addition, the current process makes it impossible for the vehicle industry to offer the new color change technology to the consumer.

The technical problem solved by the invention is the communication in real time and at zero cost between the owner/user of the vehicle and the competent ministry of transport, the police and the insurance company in order to allow the automatic change of the vehicle's color immediately. The updating of the relevant databases and ensuring the correctness of the data entry is carried out in real time, resulting in the real-time issuance of the necessary new license registration. In this way, energy savings are also facilitated and accelerated depending on the prevailing climatic conditions, since by updating the data in real time, the absorption or reflection of solar rays by the vehicle and consequently the heating or air conditioning needs are directly and specifically influenced. Patent document US2022024476 discloses some related prior art. In a very brief disclosure of the invention "Electronic system and method for updating vehicle color change data, in real time", the owner/user of the vehicle and/or means of transport (automobile, motorcycles, recreational craft, aircraft, etc.), using a unique security code that accompanies the vehicle and is delivered to the buyer at the time of purchase, he can choose, either through the application installed on his mobile phone or through the multimedia system that all the latest technology vehicles are equipped with, one of the available colors offered by the manufacturer for the specific model. By creating a unique pair between the vehicle owner's smart device and the vehicle's multimedia system, and once the user has selected the desired color, communication is established through the platform of the invention and the databases with certain selected entities, such as the competent administrative authorities (for example the competent ministry of transport, the police, etc.) or private entities (for example the roadside assistance company, the insurance company, etc.). Once the above-mentioned databases have been successfully updated, the new vehicle license registration with the new color is issued by the relevant competent authority and sent electronically in real time, first to the competent administrative authorities and then to the smart device application and/or the vehicle's multimedia system. Once the new license registration is received, then and only then is the corresponding command given to the vehicle's multimedia system to change the color immediately, without the need to issue a temporary license registration.

The invention of updating vehicle color change data in real time, has the advantage of achieving real-time updating of the administration data. Moreover, the sequence of actions is changed with respect to the current state of the art, so as to enable the implementation of the new technology presented by the automotive industry: the color change is no longer preceded, as is the case today, but is only carried out after the administration has been informed and a new final registration license has been issued directly. This offers the advantage of protecting public safety, while at the same time minimizing the immobilization of the car, compared to the long time currently required for the approval of the color change. In addition, the invention solves the problem of communication with the relevant competent administrative authorities (Ministry of Transport, and/or police, and/or insurance company, etc.) and avoids bureaucratic errors, because human intervention is minimized. The information is automatically updated in real time without any additional costs and charges. Moreover, the color change process can be carried out at any time or day without any restrictions due to the opening hours of the competent authorities and parties. Furthermore, the cost of paper and other accompanying forms is significantly reduced as the invention is a green solution. Studies show that consumers would regularly change the color of their vehicle if they had the opportunity to do so in order to satisfy the need for change in their daily lives and the feeling of being 'new'. Finally, because the new technologies that make it possible to change color in seconds eliminate paints that are environmentally unfriendly materials, the implementation of the present invention will result in a reduction in harmful paints, toxic materials, and transportation and energy costs because the materials are much lighter and significantly reduce the weight of the vehicles.

The invention is identified by the claims. Wherever the term "vehicle" is used in the Description and the Claims, it includes any means of transport capable of changing color.

Wherever the term "color change" is mentioned in the Description and Claims, it also means a change to a non-single color, but to colors containing patterns or different shades, etc.

The drawings accompanying the invention illustrate:
Figure 1 illustrates the topology of the system of the invention.
Figure 2 illustrates in Flow Chart form the operation of the inventive system and the method it performs and for practical purposes it extends over 5 pages as Figure 2a, Figure 2b, Figure 2c, Figure 2d and Figure 2e.

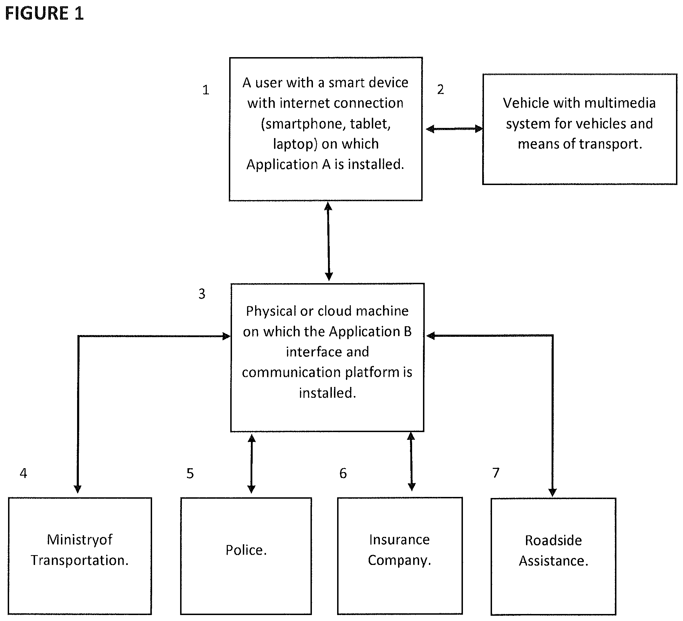

As illustrated in Figure1 of the system topology, the invention includes two applications, A and B:
The first one is the mobile application A (1), which is operated by the owners/users of the vehicles/transport vehicles and is installed and executed on smart devices with wireless internet connectivity, such as mobile phones, tablets, laptops, smart phones, etc. It is connected to the multimedia system of the vehicle/transport (2).
The second, Application B (3) interface and communication platform, is installed on a central server, either on a physical machine or in the cloud. Application B (3) handles the communication and connects, with Application A (1) mobile device (mobile application) and with the competent authorities (4, 5, 6, 7) which are public and/or private authorities involved in the process, such as the Ministry of Transport or other competent authority, the police and the insurance company where the vehicle/mean of transport is insured, etc.

The user of the invention operates and has direct access to Application A (1) of his smart device and to the multimedia system (2) of the vehicle but does not have direct access to Application B (3), but only indirectly, through Application A (1), as described in detail below.

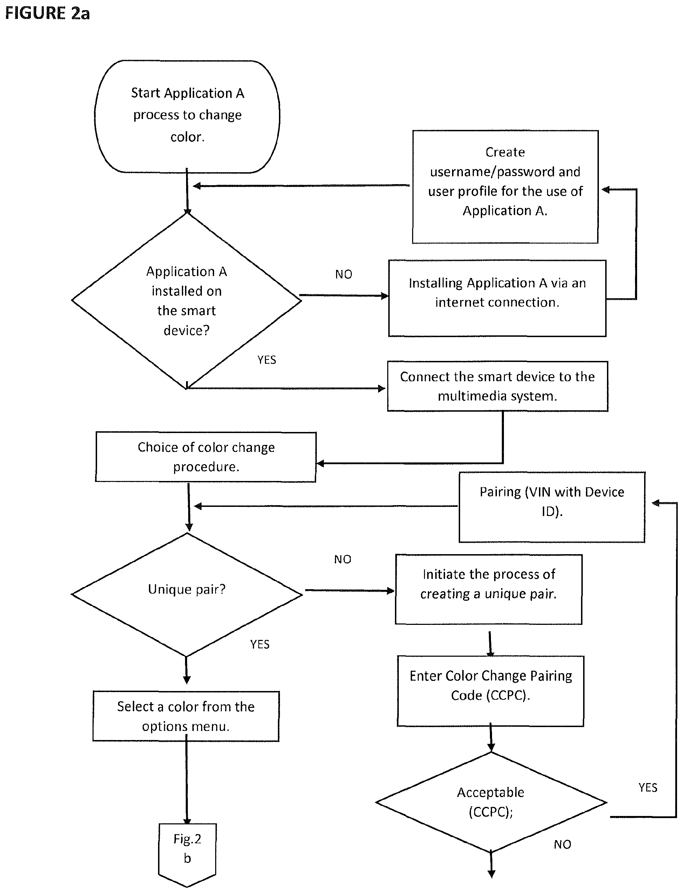

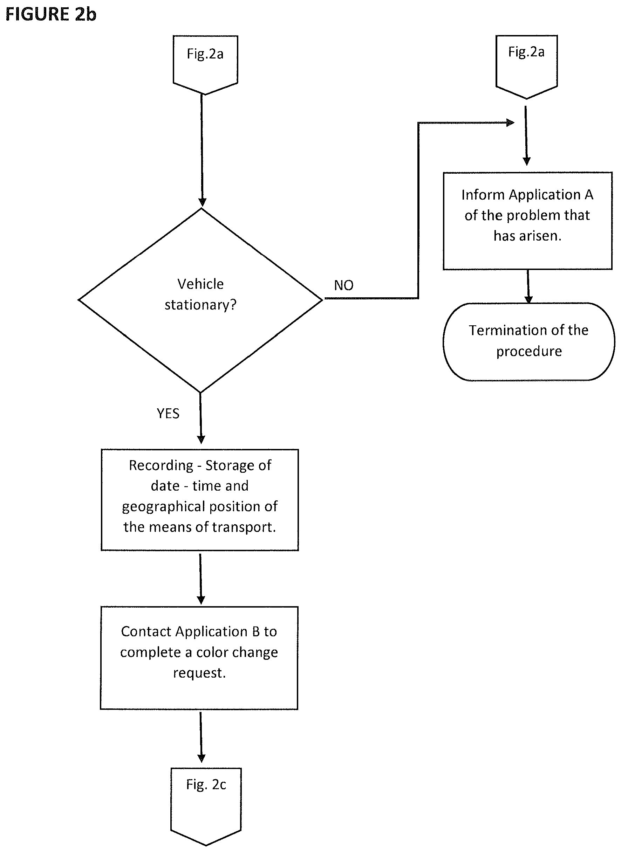

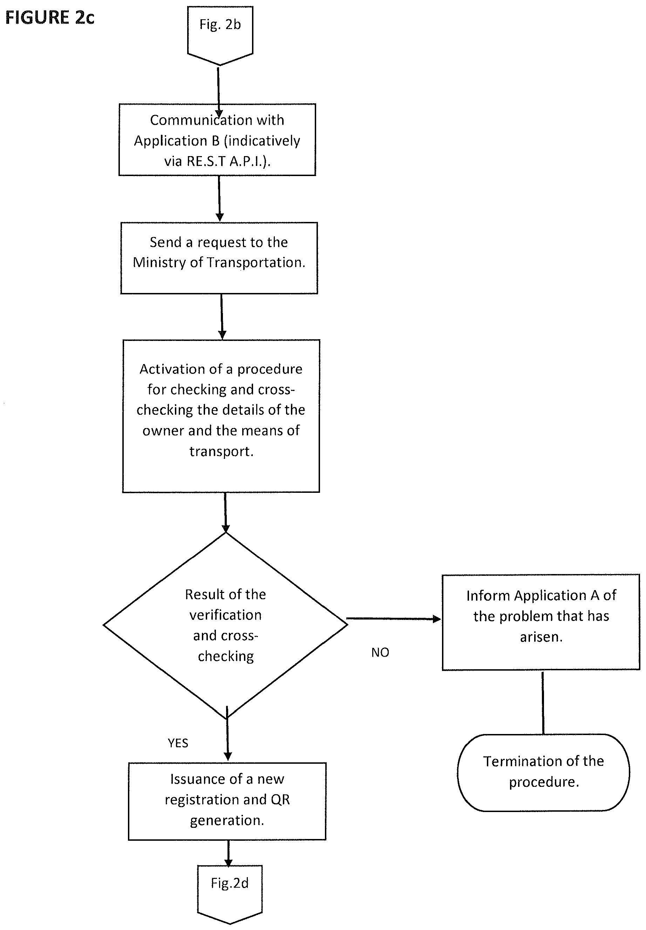

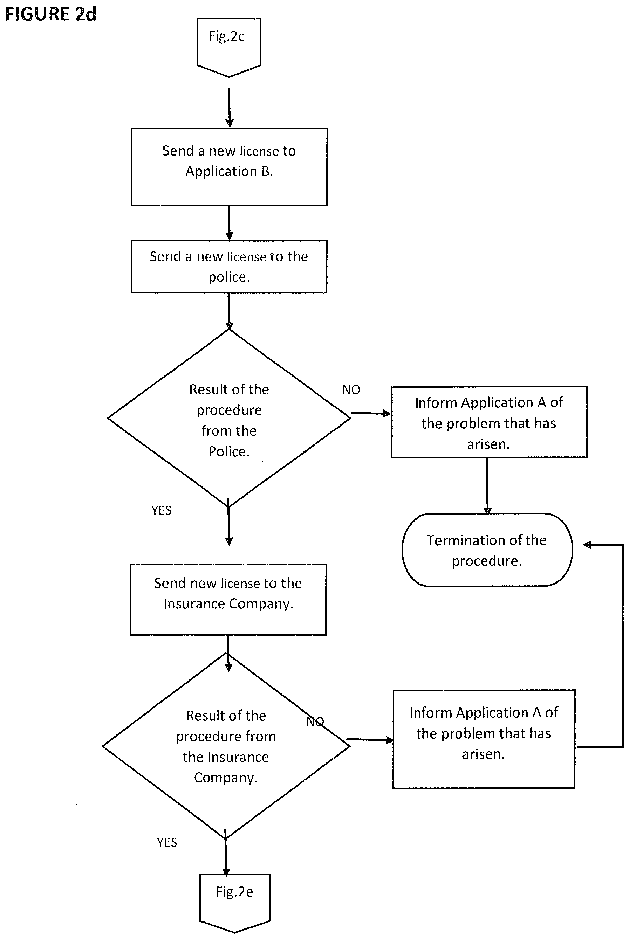

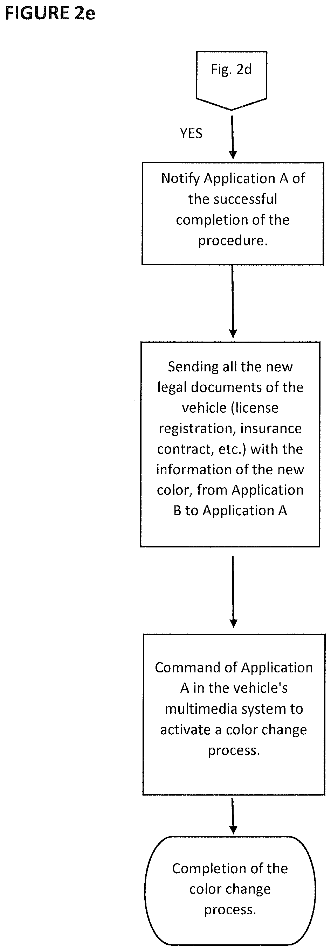

More specifically, the method of updating vehicle color change data, in real time, includes the following steps, which are illustrated in Drawing 2, which for practical purposes spans 5 pages as Figure 2a, Figure 2b, Figure 2c, Figure 2d and Figure 2e.

### STEP 1: INSTALLING APPLICATION A ON THE USER'S SMART DEVICE

As illustrated in Drawing 2a, the installation of the first application, Mobile Application A, is done by the system user on his mobile phone or any smart device. The application is implemented on mobile devices with any operating system, including but not limited to IOS and ANDROID, etc. To complete the installation, the user is asked to create the personal user profile by entering various personal data, such as but not limited to the first name, last name, ID number and license plate number of his vehicle/means of transport, along with a user code (Username) and security code (Password) of his choice. Subsequently, the two-factor authentication mechanism is adopted and the system asks the user to enter biometric characteristics, such as, but not limited to, fingerprint or face id check, etc.

The profile creation process with Username and Password and biometric features protects the user from any malicious or non-malicious use of the color change application by a third party without his permission and ensures public safety and the smooth operation of the public administration.

The second application, Application B (3) interface and communication platform, is installed on a central server, either on a physical machine or in the cloud.

### STEP 2: CONNECTING THE USER'S SMART DEVICE TO THE VEHICLE'S MULTIMEDIA SYSTEM ACCORDING TO THE STATE OF THE ART

The smart device (1) is then connected to the multimedia system (2) of the vehicle/ means of transport, wirelessly via Bluetooth or Wifi or wired via a cable to a USB port, as in the present state of the art. The multimedia system (2) is the main computer of the vehicle, manages all the information concerning the vehicle, such as the Vehicle Identification Number (VIN number, the unique number assigned to the vehicle by its manufacturer at the time of its manufacture), the operation of the radio, air conditioning, GPS, etc., and is responsible for the transfer of data to the individual systems connected to it. The connection shall be made by any of the methods provided for in the current state of the art.

### STEP 3: ACTIVATION OF THE COLOR CHANGE MENU AND INTRODUCTION OF THE COLOR CHANGE PAIRING CODE (CCPC) - RECORDING OF THE VIN NUMBER IN THE SMART DEVICE

After connecting the smart device (1) to the multimedia system (2) of the vehicle/means of transport, the user can use all the functions of the Color Change Application, such as, but not limited to, statistics on fuel and electricity consumption, refueling points, geographical characteristics and vehicle route, etc., as well as the vehicle color change. In particular, for changing the color for the first time, the user selects the color change function and activates it using a special unique Color Change Pairing Code (CCPC), which according to the invention is factory set (by the manufacturer) and is given to the owner upon purchase of the vehicle. This is a code for pairing to the multimedia system and is only relevant to the color change function, which code, in the example embodiment of the inventive concept described here, can be an eight-digit alphanumeric code and which must never be kept inside the vehicle by the owner (so that there is no possibility of it coming into the possession of a third party, non-owner). In this way a pair is established between the user's smart device (1) and the vehicle's multimedia system (2). This process is only relevant for the first time the user changes the color of the vehicle. For subsequent color changes, with the same smart device (1) and the same vehicle, no pairing is required, because the vehicle's multimedia system has recorded the ID number of the device (1) from the first time. Since several multi-user devices can be connected to the vehicle's multimedia system, the color change process can only be performed by the owner/user device (1) that will have made the pairing with the Color Change Pairing Code (CCPC), which is exclusively related to the color change.

With the pairing, synchronization is achieved between the multimedia system (2) and Application A installed on the smart device (1). Application A installed on the smart device (1) records the VIN number of the vehicle which is unique for the vehicle, and at the same time the vehicle's multimedia system (2) records the ID number of the smart device (1).

With the above steps, the multimedia system (2) is connected to the smart device (1) of the user/owner and through it to Application A.

Steps 1 to 3 above are done once during the initial installation of Application A and the creation of the color change link and are not repeated.

In case of resale of the vehicle, the new owner is given, according to the invention, the unique Color Change Pairing Code (CCPC) because with this code the new owner will make a new pairing with his own smart device (1). Alternatively, the system is reset to factory settings and the new owner will have to go to the official dealership and ask for a new unique Color Change Pairing Code (CCPC) to be issued.

In case of theft of the vehicle, a color change cannot be achieved by the offender, because the use of the unique Color Change Pairing Code (CCPC) will be required.

In case the user changes his smart device (1), he will have to re-install the application on his new device (1) and then connect the new device (new pairing) to the multimedia system (2), according to Step 2, using the same Color Change Pairing Code (CCPC).

In case of theft of the smart device (1), there is no public order risk, since the biometric characteristics of the owner are necessary for the smart device to execute the color change command.

### STEP 4: INITIATION OF THE VEHICLE COLOR CHANGE PROCESS

Then, after the successful completion of the pairing process (in Step 3) and the synchronization between the media system (2) and Application A, the user can make the first color change.

The color change may be performed either by the smart device (1) Application A or by the media system (2) by entering a code requested by the media system and reproduced by the smart device (1). This code is, according to the current state of the art, a rolling code valid for a predetermined period of time (e.g. 60 seconds), in order to ensure that there is no accumulation of codes for postdated uses. Then, from the color change menu, the vehicle/transportation means owner selects the color he wishes from a palette of available colors or designs and finalizes his choice without the possibility of withdrawal.

### STEP 5: TRANSMISSION OF COLOR CHANGE REQUEST

With the vehicle immobilized (for example, in the case of a car, it must be stationary, with the gear selector in the 'park (P)' or 'neutral' position and the handbrake on, and in the case of other vehicles, with the corresponding immobilizing devices engaged, etc. ) (drawing 2b), as soon as the user selects the color and presses the confirmation button (Step 4), the Application A installed on the smart device (1) (mobile application) records for security reasons the date, all data such as time and position of the vehicle with latitude and longitude and at the same time automatically connects via internet in real time with continuous and uninterrupted communication (indicative technology RE. S.T A.P.I -Representational State Transfer Application Programming Interface) with the Application B interface and communication platform and transfers the specific color selection and all the above data as a first set of data to the competent authorities for approval (Figure 2c).

### STEP 6: INFORMING PUBLIC AUTHORITIES OF THE CHANGE OF COLOR - LEGALIZATION CHECK OF THE USER

The Application B (3) interface and communication platform is connected in the same way in real time (indicatively by technology via RE.S.T A.P.I.) with the main computer and the database of the Ministry of Transport or the competent authority in accordance with the applicable legislation. There it informs about the imminent change of a specific color of the vehicle/means of transport with the chassis number and license plate number as successfully recorded in the above steps.

The competent authority's computer, using technology that ensures the security and uniqueness of the interface between Application B and the authority (indicatively, HASP processor technology), performs a user authentication check, i.e. a check of the cross-check of the data of the owner and the vehicle for which the color change is requested. This is followed by a check and matching of the vehicle identification number (VIN) with the license registration and a check of additional parameters concerning the existence of all legal requirements and the absence of legal irregularities on the part of the user, such as, but not limited to, that no license registration fees are due, that the driver's license is valid, etc. The result of this check is the identification of the specific user as the legal owner of the specific vehicle, or as the legal representative of the legal owner. The particular data information of the legalization is described above as an example embodiment of the present invention. The legalization applies accordingly to cases of other vehicles, implementing the invention in a similar way. In case the vehicle/mean of transport is moved or if a problem or irregularity is detected in any of the above checks, the process is immediately stopped, and the user/owner is informed that his request for a color change is rejected (Figure 2c).

### STEP 7: COMPLETION OF LEGALISATION CHECK - ISSUE OF NEW LICENSE REGISTRATION

Once the user's legalization check has been successfully completed, the change of color is approved by the Ministry of Transport or the competent national authority and the new license registration with the new color is automatically issued. At the same time a "QR Code (Quick Response, a two-dimensional bar code) containing the details of the new license registration is generated, thus creating a second set of data (Figure 2c).

### STEP 8: TRANSMISSION OF THE NEW LICENSE REGISTRATION TO THE COMPETENT AUTHORITIES

The QR Code containing the new license registration is sent from the central computer of the Ministry of Transport or the competent national authority that issued the license registration, back to the Application B (3) interface and communication platform, which simultaneously connects in the same way (indicatively with technology via RE.S.T A.P.I) with the databases of further involved authorities, such as, indicatively, the police and the insurance company and informs them about the new license registration that has just been issued (Figure 2d).

Immediately after the successful update of the databases of the entities involved (indicatively, the police and the insurance company), the public documents (entries) are modified and adapted to the new data (such as, indicatively, the insurance company issues a new insurance contract based on the new license registration) and a third data set is created with the QR Codes issued with the new data of the vehicle documents.

### STEP 9: TRANSMISSION OF THE NEW LICENSE REGISTRATION TO THE USER/OWNER

At the same time, the Application B (3) interface and communication platform reconnects to the Application A of the smart device (mobile application) and sends the QR Code with the new license registration and the QR Code with the new insurance contract to the Application A of the user/owner's smart device. When the license registration is received by application A, the process is completed and then and only then a command is given by application A to the vehicle's multimedia system and the change of the selected color is executed (Figure 2e).

In case the applicable legislation provides for additional legal documents, these are communicated in the same way, i.e. by issuing a new QR Code (re-encoding of data) that is sent to the smart device (1) of the user/owner.

Both the QR Code with the license registration and the QR Code with the new insurance contract (or any other legal documents provided for by the applicable legislation, such as, for example, driving license and identity card) remain in Application A on the user's/owner's smart device to be shown in case of inspection by the authorities. At the same time, they are also saved in the multimedia system of the vehicle/ means of transport so that in case of damage or loss of the smart device on which the App A is installed, they can be scanned and the necessary inspection can be carried out from there. In addition, the App A on the smart device provides a printing function via a wireless connection to a printer of the owner's choice in case the owner wishes to print the new license registration and/or the new insurance contract.

The color change process as described above can take from a few seconds to a few minutes depending on the available network in the area where the user/owner of the vehicle is located at the time. The mechanism is fully automated so that it can operate twenty-four hours a day, seven days a week quickly, timely and in complete safety. Without an available network, the method cannot be implemented.

Indicative examples of the inventive method's embodiment:
In an example embodiment of the inventive method, further involved entities according to Step 8, include any public and/or private entity responsible for any color change, according to the national legislation governing the vehicle.

In a further example embodiment of the inventive method, the third set of data according to Step 8, includes the insurance policy, the contract with the roadside assistance company and any legal document provided by the respective applicable legislation of the state of the vehicle in case of a color change.

In a further example embodiment of the inventive method, the further involved parties included in the set of further involved parties belong to more than one state.

In a further example embodiment of the inventive method, Application A, through its connection to the vehicle's multimedia system, records and displays any of the following information about the vehicle: exterior temperature, interior temperature, engine temperature, fuel level, tire air pressure, tire air pressure, engine oil level, battery and/or battery charge level, nearest fueling point or electric car battery charging station, all color changes that have taken place, statistics on distances and cities visited by the vehicle by color, region, days of the week, hours of the day.

In a further example embodiment of the inventive method, if the applicable legislation provides for additional legal documents, these are communicated by re-encoding data sent encoded to the user/owner's smart device (1) according to step 9.

Both Application A on the smart device (mobile application) and Application B (3) interface and communication platform can be configured and operate based on the specifications of the manufacturer and/or the legislator, with the criterion of protecting public order. For example, color change will be able to occur at specified intervals e.g., only once (1) per week or based on number of changes per year e.g., up to twenty (20) times per year and/or in combination.

Additional features and functions of the Application A (mobile application):
By using the application, the owner is informed of all the color changes he has made in the form of a list and a sophisticated visualization on the map. He sees statistics on the kilometers and cities he has visited by color, region, days in the week, hours in the day, etc. The application, through its connection to the multimedia system of the vehicle, can also display the following vehicle information: external temperature, internal temperature, engine temperature, petrol level, tire pressure, air pressure, engine oil level, battery and/or battery level, nearest refueling point (fuel or electric car battery charging station).

Additional features and functions of the Application B interface and communication platform:
The platform stores the information of VIN, vehicle registration number and geographic location of the car when changing the color and is available to competent authorities whenever necessary. In addition, the application easily and quickly processes a multitude of information and automatically generates statistics and reports useful for the parties involved, such as transport ministries, insurance companies, police authorities, etc.

The invention is applicable to all automotive industries that have developed new technologies that achieve color change instantaneously, within a few seconds, through special coatings containing particles which, by means of electricity or other technology, change the color of the car in seconds, as well as to industries producing other vehicles and means of transport where a registration permit is required due to color change. These are industries producing cars, motorcycles, buses, buses, yachts, aircraft, trains, trains and other vehicles, means of transport and means of public transport.

Furthermore, the invention is applicable to all public and private bodies and/or organizations involved in the correct and safe operation and/or circulation of vehicles, means of transport, public transport, etc. It contributes to fast and secure communication between them for the control and processing of information data in order to ensure smooth traffic flow and protect public safety. These entities in the example embodiment of the invention described herein are the competent ministries of transport and traffic together with their branches, police authorities, roadside assistance companies and insurance companies.

The invention may additionally find application for the real-time updating of other vehicle data and vehicle characteristics mentioned in the vehicle registration. For example:
- the case of a change in the weight of the vehicle resulting from the replacement of batteries
- the case of a change in the dimensions of the vehicle resulting from the automatic lengthening of parts of the vehicle (a technique that has been shown experimentally), etc.
where it is necessary to inform the authorities and all parties involved, in the same way as for a color change.

Furthermore, the invention also applies to special purpose vehicles, such as military vehicles (e.g., camouflage color change) where the recording and updating of data takes place in real time by specialized operators and in special purpose files.

Also, in the case where transnational cooperation is required, as is the case for example in changing the country of classification, the invention can be applied in a similar way.

## Claims

1. A method for updating vehicle color change data in real time, comprising the following steps
Step 1: installing a first application A on a smart device connected to a user, wherein the user is identified by the first application A with a two-factor authentication function
installing a second application - interface and communication platform B on a server computer, either on a physical machine or in the cloud,
Step 2: connect the smart device (1) to the vehicle's multimedia system (2)
Step 3: activation of the vehicle's color change function, using a unique factory Color Change Pairing Code (CCPC) associated with the vehicle, which activation comprising a pairing between the smart device (1) and the vehicle's multimedia system (2), which pairing comprising
recording the unique vehicle identification number (VIN) in Application A of the smart device
recording the unique identification code of the smart device (device ID number) in the vehicle's multimedia system
wherein the above steps 1-3 are only performed during the initial installation of Application A and the creation of the color change pairing and are not repeated
Step 4: start the vehicle color change operation, which includes
color selection, either by the smart Device Application A (1) or by the Multimedia System (2), by entering a code requested by the Multimedia System and generated by the Smart Device (1), and finalizing the color selection, without possibility of withdrawal
Step 5: confirm the color selection and record via Application A the date, time, geographical position, latitude and longitude of the vehicle and other vehicle data,
connection of Application A via internet with continuous and uninterrupted real-time communication (indicatively RE.S.T A.P.I. technology - Representational State Transfer Application Programming Interface) with the interface and communication platform and transfer of the specific color selection and all the above data to the competent authorities for approval,
Step 6: connection through internet between Application B interface and communication platform with continuous and uninterrupted real-time communication (indicatively via RE.S.T A.P.I. technology) with the central computer and the database of the competent authority, according to the legislation in force
informing the competent authority of the impending change of a specific vehicle color with the chassis number and license plate number as successfully recorded in the above steps,
perform user legalization check from the competent authority's computer using technology that ensures the security and uniqueness of the connection between Application B and the authority (for example, HASP processor technology), by cross-checking the details of the owner and the vehicle for which the color change is requested,
checking and matching the vehicle identification number (VIN) with the license registration and checking additional parameters concerning the absence of legal irregularities on the user
identification of that specific user as the legal owner of the specific vehicle, otherwise the request is rejected,
Step 7:
Approval of the color change request,
issuing a new registration permit with the new color; And
encoding of a data set containing the data of the new marketing authorization, which constitutes a second data set by the competent authority
Step 8: transfer, from the competent authority that issued the new license registration, the second set of data via the Application B-Interface and Communication platform to all further involved authorities,
recording, by the further actors involved, the second data set, modifying the existing entries and adapting them to the new data, generating with the new entries a third data set
Step 9: transfer to Application A of the smart device (mobile application) via Application B - interface and communication platform, the third data set with the new entries
command from application A to the vehicle's multimedia system to change the selected color
change of color of the vehicle in real time.

2. A method of updating vehicle color change data in real time according to claim 1, wherein the further involved parties according to Step 8 include any public and/or private authority responsible for any color change, according to national legislation governing the vehicle.

3. A method of updating vehicle color change data in real time according to claims 1 to 2, wherein the third set of data according to Step 8 comprises the insurance policy, the contract with the roadside assistance company and any legal document provided for by the applicable legislation of the state of the vehicle in the case of a color change.

4. A method of updating vehicle color change data in real time according to any one of claims 1 to 3, wherein the further involved entities included in the set of further involved entities belong to more than one state.

5. A method of updating vehicle color change data in real time according to any one of claims 1 to 4, wherein
Application A, through its connection to the vehicle's multimedia system, records and displays any of the following information about the vehicle: external temperature, internal temperature, engine temperature, fuel level, tire pressure, tire air pressure, engine oil level, battery and/or battery charge level, nearest fuel supply point or electric car battery charging station, all color changes that have taken place, statistics on the distances and cities he has visited by color, region, days in the week, hours in the day, etc.

6. A method of updating vehicle color change data in real time according to any one of claims 1 to 5, wherein if the applicable legislation provides for additional legal documents, these are communicated by re-encoding data sent encoded to the user/owner's smart device (1) according to step 9.

7. A system for updating vehicle color change data in real time, implementing the method of claims 1-6, comprising
Mobile application A (1), which application is operated by the owners/users of the vehicles and which application is installed and executed on smart devices with wireless internet connectivity, which application A (1) is connected to the vehicles' multimedia system (2)
and
Application B (3) interface and communication platform, which is installed on a central server computer, on a physical machine, or in the cloud, which Application B (3) handles the communication and connects, with Application A (1) of the smart mobile device (mobile application), with the competent authorities (4, 5, 6, 7) for the color change, and with the further authorities involved in the color change process.

## Patentansprüche

1. Verfahren zum Aktualisieren von Fahrzeugfarbänderungsdaten in Echtzeit, das die folgenden Schritte umfasst
Schritt 1: Installieren einer ersten Anwendung A auf einem intelligenten Gerät, das mit einem Benutzer verbunden ist, wobei der Benutzer von der ersten Anwendung A mit einer Zwei-Faktor-Authentifizierungsfunktion identifiziert wird
installieren einer zweiten Anwendung - Schnittstelle und Kommunikationsplattform B auf einem Servercomputer, entweder auf einer physischen Maschine oder in der Cloud,
Schritt 2: Verbindung des intelligenten Geräts (1) mit dem Multimediasystem des Fahrzeugs (2)
Schritt 3: Aktivierung der Farbänderungsfunktion des Fahrzeugs unter Verwendung eines eindeutigen werkseitigen Farbwechsel-Koppelcode (CCPC), der mit dem Fahrzeug verknüpft ist, wobei die Aktivierung eine Kopplung zwischen dem intelligenten Gerät (1) und dem Multimediasystem des Fahrzeugs (2) umfasst, wobei die Kopplung Folgendes umfasst
Aufzeichnung der eindeutigen Fahrzeug-Identifizierungsnummer (VIN) in der Anwendung A des intelligenten Geräts
Aufzeichnung des eindeutigen Identifizierungscodes des intelligenten Geräts (Geräte-ID-Nummer) im Multimediasystem des Fahrzeugs
wobei die obigen Schritte 1-3 nur während der Erstinstallation der Anwendung A und der Erstellung der Farbwechsel-Kopplung durchgeführt und nicht wiederholt werden
Schritt 4: Start des Farbwechselvorgangs des Fahrzeugs, der die Farbauswahl entweder durch die Anwendung A (1) des intelligenten Geräts oder durch das Multimediasystem (2) umfasst, durch Eingabe eines vom Multimediasystem angeforderten und vom intelligenten Gerät (1) generierten Codes und Abschluss der Farbauswahl, ohne Widerrufsmöglichkeit
Schritt 5: Bestätigung der Farbauswahl und Aufzeichnung über die Anwendung A des Datums, der Uhrzeit, der geografischen Position, des Breitengrads und des Längengrads des Fahrzeugs und anderer Fahrzeugdaten,
Verbindung der Anwendung A über das Internet mit kontinuierlicher und ununterbrochener Echtzeitkommunikation (indikativ REST-API, Technologie - Repräsentationaler Zustandsübertragungs-Anwendungsprogrammierschnittstelle) mit der Schnittstelle und der Kommunikationsplattform und Übertragung der spezifischen Farbauswahl und aller oben genannten Daten an die zuständigen Behörden zur Genehmigung,
Schritt 6: Verbindung über das Internet zwischen der Schnittstelle der Anwendung B und der Kommunikationsplattform mit kontinuierlicher und ununterbrochener Echtzeitkommunikation (indikativ über RE.S.T A.P.I, Technologie) mit dem Zentralcomputer und der Datenbank der zuständigen Behörde gemäß den geltenden Rechtsvorschriften
Benachrichtigung der zuständigen Behörde über die bevorstehende Änderung einer bestimmten Fahrzeugfarbe mit der in den obigen Schritten erfolgreich erfassten Fahrgestellnummer und amtlichen Kennzeichen,
Durchführung einer Überprüfung der Benutzerlegalisierung vom Computer der zuständigen Behörde aus unter Verwendung einer Technologie, die die Sicherheit und Eindeutigkeit der Verbindung zwischen der Anwendung B und der Behörde gewährleistet (z. B. HASP-Prozessortechnologie), durch Gegenprüfung der Angaben zum Eigentümer und zum Fahrzeug, für das die Farbänderung beantragt wird,
Überprüfung und Abgleich der Fahrzeug-Identifizierungsnummer (VIN) mit der Lizenzregistrierung und Überprüfung zusätzlicher Parameter bezüglich des Nichtvorhandenseins rechtlicher Unregelmäßigkeiten bei der Benutzeridentifizierung dieses bestimmten Benutzers als rechtmäßiger Eigentümer des bestimmten Fahrzeugs, andernfalls wird der Antrag abgelehnt,
Schritt 7:
Genehmigung des Farbänderungsantrags,
Erteilung einer neuen Registrierungserlaubnis mit der neuen Farbe; und
Kodierung eines Datensatzes mit den Daten der neuen Marktzulassung, der einen zweiten Datensatz der zuständigen Behörde darstellt
Schritt 8: Übertragung des zweiten Datensatzes von der zuständigen Behörde, die die neue Lizenzregistrierung ausgestellt hat, über die Anwendung B-Schnittstelle und Kommunikationsplattform an alle weiteren beteiligten Behörden,
Erfassung des zweiten Datensatzes durch die weiteren beteiligten Akteure, Änderung der bestehenden Einträge und Anpassung an die neuen Daten, Generierung eines dritten Datensatzes mit den neuen Einträgen
Schritt 9: Übertragung des dritten Datensatzes mit den neuen Einträgen an die Anwendung A des intelligenten Geräts (mobile Anwendung) über die Anwendung B-Schnittstelle und Kommunikationsplattform
Befehl von der Anwendung A zum Multimediasystem des Fahrzeugs, um die ausgewählte Farbe zu ändern
Farbänderung des Fahrzeugs in Echtzeit.

2. Verfahren zum Aktualisieren von Fahrzeugfarbänderungsdaten in Echtzeit nach Anspruch 1, wobei die weiteren Beteiligten gemäß Schritt 8 jede öffentliche und/oder private Behörde umfassen, die für eine Farbänderung gemäß der nationalen Gesetzgebung, die das Fahrzeug regelt, verantwortlich ist.

3. Verfahren zum Aktualisieren von Fahrzeugfarbänderungsdaten in Echtzeit nach den Ansprüchen 1 bis 2, wobei der dritte Datensatz gemäß Schritt 8 die Versicherungspolice, den Vertrag mit dem Pannendienstunternehmen und jedes rechtliche Dokument umfasst, das durch die geltende Gesetzgebung des Zustands des Fahrzeugs im Falle einer Farbänderung vorgesehen ist.

4. Verfahren zum Aktualisieren von Fahrzeugfarbänderungsdaten in Echtzeit nach einem der Ansprüche 1 bis 3, wobei die weiteren beteiligten Einheiten, die in dem Satz von weiteren beteiligten Einheiten enthalten sind, zu mehr als einem Land gehören.

5. Verfahren zum Aktualisieren von Fahrzeugfarbänderungsdaten in Echtzeit nach einem der Ansprüche 1 bis 4, wobei
Die Anwendung A zeichnet durch ihre Verbindung mit dem Multimediasystem des Fahrzeugs eine der folgenden Informationen über das Fahrzeug auf und zeigt diese an: Außentemperatur, Innentemperatur, Motortemperatur, Kraftstoffstand, Reifendruck, Reifenluftdruck, Motorölstand, Batterie und/oder Batterieladestand, nächstgelegener Kraftstoffversorgungspunkt oder Ladestation für Elektroautobatterien, alle erfolgten Farbänderungen, Statistiken über die Entfernungen und Städte, die es besucht hat, nach Farbe, Region, Wochentagen, Stunden am Tag usw.

6. Verfahren zum Aktualisieren von Fahrzeugfarbänderungsdaten in Echtzeit nach einem der Ansprüche 1 bis 5, wobei, wenn die geltende Gesetzgebung zusätzliche rechtliche Unterlagen vorsieht, diese durch Umcodieren von Daten kommuniziert werden, die gemäß Schritt 9 codiert an das intelligente Gerät (1) des Benutzers/Eigentümers gesendet werden.

7. System zum Aktualisieren von Fahrzeugfarbänderungsdaten in Echtzeit, das das Verfahren nach den Ansprüchen 1-6 implementiert, das Folgendes umfasst:
Mobile Anwendung A (1), welche Anwendung von den Eigentümern/Benutzern der Fahrzeuge betrieben wird und welche Anwendung auf intelligenten Geräten mit drahtloser Internetverbindung installiert und ausgeführt wird, welche Anwendung A (1) mit dem Multimediasystem der Fahrzeuge verbunden ist (2)
und
Anwendung B-(3)-Schnittstelle und Kommunikationsplattform, die auf einem zentralen Servercomputer, auf einer physischen Maschine oder in der Cloud installiert ist, welche Anwendung-B-(3) die Kommunikation übernimmt und mit Anwendung A (1) des intelligenten mobilen Geräts (mobile Anwendung) mit den zuständigen Behörden (4, 5, 6, 7) für den Farbwechsel und mit den weiteren am Farbwechselprozess beteiligten Behörden verbindet

## Revendications

1. Une méthode de mise à jour des données de changement de couleur des véhicules en temps réel, comprenant les étapes suivantes
Étape 1: installer une première application A sur un appareil intelligent connecté à un utilisateur, où l'utilisateur est identifié par la première application A à l'aide d'une fonction d'authentification à deux facteurs,
Installer une deuxième application - interface et plateforme de communication B sur un ordinateur serveur, que ce soit sur une machine physique ou dans le cloud,
Étape 2: connecter l'appareil intelligent (1) au système multimédia (2) du véhicule
Étape 3: activer la fonction de changement de couleur du véhicule à l'aide d'un Code d'appairage de changement de couleur (CCPC) unique associé au véhicule, cette activation comprenant un appairage entre l'appareil intelligent (1) et le système multimédia (2) du véhicule, cet appairage comprenant
l'enregistrement du numéro d'identification unique du véhicule (NIV) dans l'Application A de l'appareil intelligent
l'enregistrement du code d'identification unique de l'appareil intelligent (numéro d'identification de l'appareil) dans le système multimédia du véhicule
où les étapes 1 à 3 ci-dessus ne sont effectuées que lors de l'installation initiale de l'Application A et de la création de l'appairage de changement de couleur, et ne sont pas répétées
Étape 4: démarrer l'opération de changement de couleur du véhicule, qui comprend
la sélection de la couleur, soit à l'aide de l'Application A de l'appareil intelligent (1), soit à l'aide du système multimédia (2), en saisissant un code demandé par le système multimédia et généré par l'appareil intelligent (1), puis en finalisant la sélection de la couleur, sans possibilité de révocation
Étape 5: confirmer la sélection de couleur et enregistrer via l'Application A la date, l'heure, la position géographique, la latitude et la longitude du véhicule et les autres données du véhicule,
connecter l'Application A par Internet, avec une communication en temps réel continue et ininterrompue (à titre indicatif, à l'aide de la technologie de l'Interface de programmation d'application RE.S.T.: "Representational State Transfer"), à l'interface et à la plateforme de communication, et transférer la sélection de couleur spécifique et toutes les données précitées aux autorités compétentes pour approbation,
Étape 6: connecter l'interface de l'Application B avec la plateforme de communication par Internet pour établir une communication continue et ininterrompue en temps réel (à titre indicatif, à l'aide de la technologie de l'Interface de programmation d'application RE.S.T.) avec l'ordinateur central et la base de données de l'autorité compétente, conformément à la législation en vigueur
informer l'autorité compétente du changement de couleur envisagé d'un véhicule spécifique, en indiquant le numéro de châssis et le numéro d'immatriculation enregistrés avec succès lors des étapes précédentes,
effectuer un contrôle de la légalité de l'utilisateur à partir de l'ordinateur de l'autorité compétente à l'aide d'une technologie qui garantit la sécurité et l'unicité de la connexion entre l'Application B et l'autorité (par exemple, la technologie du pilote HASP), en comparant les renseignements sur le propriétaire et sur le véhicule pour lequel le changement de couleur est demandé,
vérifier et associer le numéro d'identification du véhicule (NIV) avec son numéro d'immatriculation, et vérifier les paramètres supplémentaires en ce qui concerne l'absence d'irrégularités juridiques chez l'utilisateur
identifier cet utilisateur spécifique en tant que propriétaire légal de ce véhicule en particulier, sinon la demande est rejetée,
Étape 7:
Approbation de la demande de changement de couleur,
délivrance de la nouvelle autorisation d'immatriculation avec la nouvelle couleur ; Et encodage d'un ensemble de données contenant les données de la nouvelle autorisation de mise sur le marché, qui constitue un deuxième ensemble de données de l'autorité compétente
Étape 8: transférer le deuxième ensemble de données par l'interface de l'Application B et la plateforme de communication, depuis l'autorité compétente qui a délivré la nouvelle immatriculation, envers toutes les autres autorités concernées,
enregistrer le deuxième ensemble de données en impliquant les autres acteurs concernés, modifier les entrées existantes et les adapter aux nouvelles données, générer un troisième ensemble de données avec les nouvelles entrées
Étape 9: transférer le troisième ensemble de données avec les nouvelles saisies vers l'application A de l'appareil intelligent (application mobile) par l'interface de l'Application B et la plateforme de communication
envoyer la commande de l'Application A vers le système multimédia du véhicule pour modifier la couleur sélectionnée
changer la couleur du véhicule en temps réel.

2. Une méthode de mise à jour des données de changement de couleur des véhicules en temps réel, selon la revendication 1, où les autres parties impliquées selon l'Étape 8 comprennent toute autorité publique et/ou privée responsable de tout changement de couleur, conformément à la législation nationale dont le véhicule relève.

3. Une méthode de mise à jour des données de changement de couleur des véhicules en temps réel, selon les revendications 1 et 2, où le troisième ensemble de données selon l'Étape 8 comprend la police d'assurance, le contrat avec la société d'assistance routière et tout document juridique prévu par la législation applicable de l'État du véhicule en cas de changement de couleur.

4. Une méthode de mise à jour des données de changement de couleur des véhicules en temps réel, selon l'une quelconque des revendications de 1 à 3, où les autres entités impliquées, comprises dans l'ensemble des autres entités impliquées, appartiennent à plusieurs États.

5. Une méthode de mise à jour des données de changement de couleur des véhicules en temps réel, selon l'une quelconque des revendications de 1 à 4, où
l'Application A, connectée au système multimédia du véhicule, enregistre et affiche toutes les informations suivantes concernant le véhicule : température extérieure, température intérieure, température du moteur, niveau de carburant, pression des pneus, pression d'air des pneus, niveau d'huile moteur, niveau de batterie et/ou niveau de charge de la batterie, station-service la plus proche ou borne de recharge pour voiture électrique la plus proche, tous les changements de couleur qui ont eu lieu, statistiques sur les distances parcourues et les villes visitées par couleur, région, jours de la semaine, heures de la journée, etc.

6. Une méthode de mise à jour des données de changement de couleur des véhicules en temps réel, selon l'une quelconque des revendications de 1 à 5, où les documents juridiques supplémentaires éventuellement prévus par la législation applicable sont communiqués par recodage des données envoyées sous forme codée à l'appareil intelligent (1) de l'utilisateur/propriétaire comme indiqué à l'étape 9.

7. Un système de mise à jour des données de changement de couleur des véhicules en temps réel par la méthode des revendications de 1 à 6, comprenant
une Application mobile A (1), exploitée par les propriétaires/utilisateurs des véhicules et installée et exécutée sur des appareils intelligents dotés d'une connexion Internet sans fil, où cette Application A (1) est connectée au système multimédia des véhicules (2)
et
une interface et une plateforme de communication de l'Application B (3) installée sur un serveur central, sur une machine physique ou dans le cloud, où cette Application B (3) gère la communication et se connecte à l'Application A (1) de l'appareil mobile intelligent (application mobile), aux autorités compétentes (4, 5, 6, 7) en matière de changement de couleur, et aux autres autorités impliquées dans le processus de changement de couleur.
